# EUROPEAN PATENT SPECIFICATION

(11) **EP 3 010 706 B1**
(45) Date of publication and mention of the grant of the patent: **08.08.2018**
(21) Application number: 14755135.2
(22) Date of filing: 20.06.2014
(51) Int. Cl.: B29D 30/32, B29D 30/24

(54) **PROCESS AND APPARATUS FOR PRODUCING TYRES FOR VEHICLE WHEELS**
VERFAHREN UND VORRICHTUNG ZUR HERSTELLUNG VON REIFEN FÜR FAHRZEUGRÄDER
PROCÉDÉ ET APPAREIL DE PRODUCTION DE PNEUS POUR DES ROUES DE VÉHICULE

(30) Priority: 21.06.2013 IT MI20131038
(43) Date of publication of application: 27.04.2016
(73) Proprietor: Pirelli Tyre S.p.A., 20126 Milano (IT)
(72) Inventor: PORTINARI, Gianni, I-20126 Milano (IT); SACCHI, Sergio, I-20126 Milano (IT)
(74) Representative: Porta, Checcacci & Associati S.p.A
(86) International application number: PCT/IB2014/062464
(87) International publication number: WO 2014/203211

(56) References cited:
- EP-A1- 0 605 189
- WO-A1-2006/003054
- WO-A1-2006/003058
- WO-A1-2012/042359
- DE-A1- 1 579 212
- DE-A1-102009 025 759
- DE-B- 1 268 372
- GB-A- 2 029 340

## Description

The present invention relates to a process and an apparatus for producing tyres for vehicle wheels.

A tyre for vehicle wheels generally comprises a carcass structure comprising at least one carcass ply formed of reinforcing cords embedded in an elastomeric matrix. The carcass ply has end edges respectively engaged with annular anchoring structures. The latter are arranged in the areas of the tyre usually identified by the name "beads" and each of them is normally formed by a substantially circumferential annular insert on which at least one filling insert is applied, in a radially outer position thereof. Such annular inserts are commonly identified as "bead cores" and they have the task of keeping the tyre firmly fixed to the anchoring seat specifically provided in the rim of the wheel, thus preventing, in operation, the radially inner end edge of the tyre coming out from such a seat.

Specific reinforcing structures having the function of improving the torque transmission to the tyre may be provided at the beads.

A belt structure is associated in a radially outer position with respect to the carcass ply, the belt structure comprising one or more belt layers arranged radially one on top of the other and having textile or metallic reinforcing cords with a crossed orientation and/or an orientation substantially parallel to the direction of circumferential extension of the tyre.

A layer of elastomeric material, called "under-belt", can be provided between the carcass structure and the belt structure, said layer having the function of making the radially outer surface of the carcass structure as uniform as possible for the subsequent application of the belt structure.

A tread band, also made of elastomeric material, is applied in a radially outer position with respect to the belt structure.

A so-called "under-layer" made of elastomeric material can be arranged between the tread band and the belt structure, the under-layer having properties suitable for ensuring a steady union of the tread band itself.

On the side surfaces of the carcass structure, each extending from one of the side edges of the tread band up to the respective annular anchoring structure to the beads, respective sidewalls of elastomeric material are also applied.

The term "elastomeric material" is used to indicate a composition comprising at least one elastomeric polymer and at least one reinforcing filler. Preferably, such a composition also comprises additives like, for example, a cross-linking agent and/or a plasticizer. Thanks to the presence of the cross-linking agent, such a material can be cross-linked through heating, so as to form the end product.

The terms "radial" and "axial" and the expressions "radially inner/outer" and "axially inner/outer" are used with reference to the radial direction and to the axial direction of a forming drum used for building the carcass structure of the tyre. The terms "circumferential" and "circumferentially" instead, are used with reference to the annular extension of the aforementioned forming drum.

The conventional processes for manufacturing tyres for vehicle wheels essentially provides for the tyre components listed above to be made separately from one another in the form of semi-finished products, to then be assembled on at least one suitable building drum.

With particular reference to the carcass structure, building the carcass structure typically comprises depositing one or more carcass plies on a forming drum rotatable about a respective rotation axis, positioning the annular anchoring structure on a respective end edge of the carcass ply/plies and turning the end edge of the carcass ply/plies around the respective annular anchoring structure.

Hereafter reference will be made without distinction both to tyres comprising a single carcass ply and to tyres comprising many carcass plies. For the sake of simplicity of description, reference will often be made to one carcass ply. What is described with reference to one carcass ply should nevertheless be considered valid also in the case of many carcass plies.

WO 2006/003058 describes a method for manufacturing a radial tyre on a building machine comprising an expandable cylindrical drum. Two support elements are arranged at the sides of the drum. A bead core is deposited close to each of the ends of a tyre component deposited on the drum. Such ends are turned over the respective bead core by inflating inflatable bladders provided on the radially outer surface of each support element. At least during a step of the inflatable bladder inflation the support elements are moved away from the drum.

Further examples for tire building drums are disclosed in GB 2 029 340 A and DE 1 579 212 A1.

US 7,837,816 describes a method for building a radial tyre on a building machine provided with an expandable carcass building drum and with two support elements, also expandable, arranged on axially opposite sides of the drum to support the end portions of the carcass ply when it is deposited on the drum. An inflatable bladder is arranged on the outer circumference of each support element to turn the end portions of the carcass ply over respective bead cores.

The Applicant has observed that, in conventional processes for building radial tyres, each carcass ply is defined by a piece of ply, for example, previously cut to size, deposited along the circumferential extension of the forming drum (many pieces of ply are deposited in succession one on top of the other on the forming drum in the case of tyres with many carcass plies). Each ply (or piece of ply) is jointed on the forming drum and comprises a plurality of metallic or textile cords that are parallel to each other and oriented substantially parallel to the rotation axis of the forming drum (the divergence from parallel is by a few degrees in the two-ply tyres), i.e. substantially perpendicular to the direction of rotation of the tyre.

The Applicant has also observed that building high-quality radial tyres requires, amongst other things, making a carcass ply having a high degree of regularity and uniformity both in the circumferential direction and in the axial direction. For this purpose, according to the Applicant it is necessary to pay particular attention both to the positioning of the ply on the forming drum, so as not to have undesired gaps or overlapping, and to the jointing of the ply itself, so as to maintain a desired structural continuity.

The Applicant has verified that in order to make a carcass ply having the desired high degree of regularity and uniformity it is advantageous, in the deposition operations of the ply on the forming drum, to use suitable annular support elements for supporting the opposite axial end edges of the aforementioned ply.

Such annular elements, indeed, ensure, together with the forming drum, complete support of the ply along the entire axial extension thereof, thus ensuring high precision and repeatability of deposition and, consequently, high quality of the various joints.

The Applicant has also observed that the use of the aforementioned annular elements, which are also used as abutment elements for the automatic joint pressing systems, allows an advantageous automation of the building operations of the carcass structure. In fact, in the absence of such annular elements the jointing of the end edges of the carcass ply necessarily requires a manual intervention, which impacts negatively on the production capacity, precision and repeatability of the jointing operation.

The Applicant has however verified that in processes and/or apparatuses in which the building of the carcass structure is carried out in a single work station (hereafter: single-station first stage building processes and/or apparatuses), i.e. without transferring the forming drum, the presence of the aforementioned annular elements, although on the one hand facilitates the deposition operations of the carcass ply, on the other hand hinders the subsequent positioning operations of the annular anchoring structure on the respective end edge of the carcass ply and turning operations of such an end edge of the carcass ply around the respective annular anchoring structure. These latter operations indeed require special positioning and turning devices to be moved in the areas adjacent to the opposite axial end portions of the forming drum, i.e. right in the areas in which the aforementioned annular elements operate.

The Applicant has also verified that it is desirable to make use of single-station first stage building processes and/or apparatuses since they allow advantageous compactness of the layout, with consequent reduction of the installation costs. With the aim of achieving the advantages discussed above, i.e. high regularity and uniformity of the carcass ply, automation of the process and compactness of the layout, the Applicant has felt the need to carry out a single-station first stage building process in which annular elements are used that allow the end edges of the carcass ply to be supported in the deposition operations thereof on the forming drum, but taking care to avoid such annular elements to be an obstacle for carrying out the subsequent positioning operations of the annular anchoring structure and turning operations of the end edge of the carcass ply around said annular anchoring structure.

In this respect, the Applicant has realised that it is advantageous to use annular support elements of the end edges of the carcass ply that are radially expandable/contractable and, preferably, axially movable with respect to the forming drum. Such annular elements, indeed, once the deposition of the carcass ply on the forming drum is complete, can be moved away (radially and, preferably, also axially) from the end edge deposited on them to allow the subsequent operations to be carried out.

The Applicant has also realised that, in the case in which an inflatable bladder is used to carry out the turning of the end edges of the carcass ply around the bead cores, it is highly advantageous to support such inflatable bladders through the aforementioned annular elements. Indeed, in this way a considerable process and layout economy is achieved.

The Applicant has however verified that, due to the limited rigidity of the elastomeric material from which the inflatable bladders are made, the presence of an inflatable bladder in a radially outer position with respect to the aforementioned annular elements could cause a non-uniform mutual positioning of the end edges of the carcass ply on the annular elements themselves, with consequent poorer quality of the joints of the aforementioned end edges and greater difficulty in carrying out such joints.

The Applicant has perceived that the aforementioned irregularity of mutual positioning of the end edges of the carcass ply can be quite relevant when the aforementioned annular elements are arranged in a radially inner position with respect to the inflatable bladder. In this case, indeed, each annular element has, on the radially outer surface thereof, two juxtaposed layers of inflatable bladder (see for example figure 2a of the aforementioned WO 2006/003058). Therefore, the thickness of elastomeric material is so high as to prevent the (rigid) radially outer surface of the annular elements from producing a beneficial structural stiffening effect of the deposition surface defined on the aforementioned annular elements.

The Applicant has also perceived that, in the case described above, the deposition surface defined by the radially outer surface of the forming drum and by the radially outer surface of the inflatable bladders supported by the aforementioned annular elements would have an undesired gap between forming drum and each annular element, impacting negatively on the surface continuity in the axial direction.

The Applicant has finally found that by arranging the aforementioned annular elements, or at least their radially outer surfaces, inside the inflatable bladders, there is a structural stiffening of the entire deposition surface of the end edges of the carcass ply/plies, and the undesired gap between forming drum and each annular element is substantially eliminated, obtaining a better surface continuity in the axial direction. In this way, regularity and uniformity of the carcass ply/plies are easily obtainable through automation of the building process even in single-station first stage building processes and/or apparatuses.

The present invention therefore relates, in a first aspect thereof, to a process for producing tyres for vehicle wheels, comprising building a carcass structure on a forming drum having a rotation axis.

Building said carcass structure preferably comprises providing, at each of the opposite axial end portions of said forming drum, a radially expandable and contractable annular element radially having a radially outer surface arranged inside an inflatable bladder and supporting said inflatable bladder when it is deflated.

Building said carcass structure preferably comprises arranging said annular element in a first operating position axially adjacent to said forming drum, said annular element being set at a predetermined first diameter.

Building said carcass structure preferably comprises depositing said at least one carcass ply on said forming drum, including depositing an axial end edge of said at least one carcass ply on said annular element.

Building said carcass structure preferably comprises radially contracting said annular element until it is set at a predetermined second diameter smaller than said first diameter.

Building said carcass structure preferably comprises positioning an annular anchoring structure on said axial end edge.

Building said carcass structure preferably comprises turning said axial end edge around said annular anchoring structure by at least inflating said inflatable bladder.

The Applicant believes that the process of the present invention makes it possible to carry out the deposition operations of the carcass ply and the positioning operations of the annular anchoring structures on each end edge of the carcass ply in the design conditions. More specifically, the deposition operations of the carcass ply on the forming drum are carried out after positioning the annular support elements of the axial end edges of the carcass ply close to the forming drum and setting such annular elements at a predetermined reference diameter, preferably equal to the diameter of the forming drum (minus the thickness of the wall of the inflatable bladder), so as to ensure the complete support of the carcass ply along the entire axial extension thereof. Positioning the annular anchoring structures on the opposite axial end edges of the carcass ply is, on the other hand, carried out after the radial contraction of the annular support elements, so as to give the annular anchoring structure free access to the respective portion of the respective end edge on which such an annular anchoring structure has be positioned.

The Applicant also believes that the process of the present invention makes it possible to make a carcass ply having a high degree of regularity and uniformity in the axial direction. According to the Applicant, indeed, the presence on the (substantially rigid) radially outer surface of the annular element of a single layer of inflatable bladder ensures that such a surface can produce a beneficial structural stiffening effect suitable for allowing a uniform deposition of the axial end edges of the carcass ply and, therefore, a high quality of the joints. Moreover, thanks to the fact that the inflatable bladder surrounds the aforementioned radially outer surface, almost totally fills the gap between forming drum and annular element, ensuring the desired continuity of the deposition surface in the axial direction.

In a second aspect thereof, the present invention relates to an apparatus for producing tyres for vehicle wheels, comprising a forming drum having a rotation axis.

The apparatus preferably comprises a deposition device for depositing at least one carcass ply on said forming drum.

The apparatus preferably comprises, at each of the opposite axial end portions of said forming drum, a radially expandable and contractable annular element configured to support an axial end edge of said at least one carcass ply.

The apparatus preferably comprises, at each of the opposite axial end portions of said forming drum, a positioning device for positioning an annular anchoring structure onto said axial end edge.

The apparatus preferably comprises, at each of the opposite axial end portions of said forming drum, an inflatable bladder configured to turn said axial end edge around said annular anchoring structure.

Preferably, a radially outer surface of said annular element is arranged inside said inflatable bladder and supports said inflatable bladder when it is deflated.

Preferably, said annular element can be set at a predetermined first diameter to support said axial end edge of said at least one carcass ply and at a predetermined second diameter, smaller than said first diameter, to allow said annular anchoring structure to be positioned onto said axial end edge.

The Applicant believes that such an apparatus allows the operations and technical effects discussed above to be obtained.

The present invention, in at least one of the aforementioned aspects, can have at least one of the following preferred characteristics.

Preferably, after depositing said at least one carcass ply on said forming drum and before radially contracting said annular element, said annular element is moved axially from said first operating position to a second operating position axially distal from said forming drum. Such a provision, advantageously, makes it possible to detach from the annular element possible portions of carcass ply stuck thereto.

Preferably, after radially contracting said annular element, it is moved axially from said second operating position to said first operating position.

More preferably, the axial movement of said annular element from said second operating position to said first operating position is carried out before positioning said annular anchoring structure onto said axial end edge. In this way the annular element is preventing from hindering the subsequent positioning operation of the annular anchoring structure on the axial end edge of the carcass ply.

Preferably, after positioning said annular anchoring structure onto said axial end edge and before turning said axial end edge around said annular anchoring structure, said annular element is radially expanded until said inflatable bladder is brought into abutment against said annular anchoring structure. In this way it is obtained an advantageous support effect of the annular anchoring structure by the annular element, during the subsequent turning of the axial end edge of the carcass ply around the annular anchoring structure.

Preferably, the radial expansion of said annular element is carried out while said annular anchoring structure is axially pushed against said forming drum. Such a provision makes it possible to avoid accidental movements of the annular anchoring structure when the annular element, after the radial expansion thereof, goes into abutment against the radially inner surface of the annular anchoring structure.

Preferably, after turning said axial end edge around said annular anchoring structure, said inflatable bladder is deflated and said annular element is radially contracted.

Preferably, after radially contracting said annular element, said annular element is axially moved away from said forming drum. It is thus possible to have, close to the drum, a free space necessary for allowing the positioning of suitable members configured to pick up the carcass structure from the forming drum.

Preferably, before depositing said at least one carcass ply on said forming drum, said forming drum is set at a predetermined deposition diameter, wherein said first diameter differs from said deposition diameter substantially by twice the thickness of said inflatable bladder. In this way, the surface defined on the annular element and on which the axial end edge of the carcass ply is deposited is substantially axially aligned with the surface defined on the forming drum and on which the axially central portion of the carcass ply is deposited, this benefiting the regularity and uniformity of deposition of the carcass ply in the axial direction and the structural continuity thereof in the circumferential direction.

In first embodiments, arranging said annular element in said first operating position comprises rotatably coupling said annular element with said forming drum. In this case the annular element is dragged in rotation by the forming drum, that is without the need to use a specific motor member to drive the rotation of the annular element.

In alternative embodiments, after arranging said annular element in said first operating position and before depositing said at least one carcass ply, said annular element and said forming drum are synchronised in rotation. In this case, it is foreseen to use a motor member for driving in rotation the annular element that is independent from the motor member for driving in rotation the forming drum and the motion of the aforementioned motor members is synchronised preferably through suitable software.

Preferably, before or after inflating said inflatable bladder, an annular thrusting member is axially moved until it is brought to a radially outer position with respect to said annular element and to the respective axial end portion of said forming drum. Such an annular thrusting member, deforming the inflated inflatable bladder, squashes it against the forming drum, thus completing the turning of the end edge of the carcass ply around the annular anchoring structure and also achieving an advantageous compacting and consolidation of the aforementioned turned end edge.

Preferably, before positioning said annular anchoring structure on said axial end edge, said axial end edge is pushed down towards said rotation axis. This is done in order to allow the subsequent positioning of the annular anchoring structure on the end edge at a shoulder of the forming drum.

Preferably, after turning said axial end edge around said annular anchoring structure, said forming drum is radially contracted until said carcass structure is separated from said forming drum. This is done in order to allow the carcass structure to be gripped by proper members to proceed with the subsequent building operations of the tyre.

Preferably, it is foreseen to:
- build a crown structure comprising at least one belt layer and a tread band;
- toroidally shape said carcass structure associating it with said crown structure. In this way a green tyre is obtained that is intended to be then subjected to moulding and vulcanization.

Preferably, said annular element is axially movable between a first operating position axially adjacent to said forming drum and a second operating position axially distal from said forming drum.

Preferably, when said forming drum is set at a predetermined deposition diameter said first diameter differs from said deposition diameter substantially by twice the thickness of said inflatable bladder.

Preferably, said annular element comprises a plurality of angular sectors circumferentially adjacent to one another and radially movable in a synchronous manner.

Preferably, a mechanical system for coupling said annular element with said forming drum is provided.

Alternatively, an electronic system for synchronising the rotation of said annular element with the rotation of said forming drum is provided.

Preferably, a annular thrusting member is provided which is axially movable and has a diameter greater than said first diameter.

Preferably, said positioning device is axially movable.

Preferably, a pushing down device for pushing said axial end edge down towards said rotation axis is provided.

Preferably, said pushing down device is axially movable at a radially inner position with respect to said positioning device.

Preferably, said forming drum is radially expandable and contractable.

Further characteristics and advantages of the present invention will become clearer from the following detailed description of preferred embodiments thereof, made with reference to the attached drawings. In such drawings:

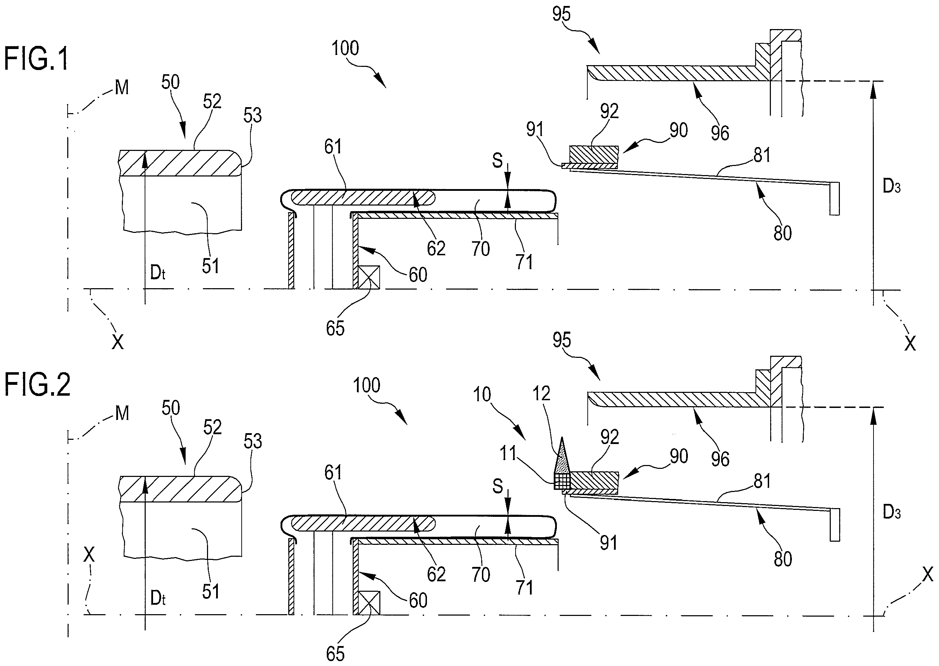

- figures 1 to 17 are schematic and cross section views of a portion of an exemplifying embodiment of an apparatus for producing a tyre in accordance with the present invention, in successive operating configurations thereof.

The aforementioned apparatus is wholly indicated with reference numeral 100.

The apparatus 100 can be used in a process for producing tyres for vehicles, preferably four-wheeled heavy load vehicles (like trucks, lorries, buses, trailers) or light load vehicles (like automobiles, light trucks). However, it is possible to use the apparatus 100 also in processes for producing tyres for two-wheeled vehicle wheels, in particular for motorcycles.

Specifically, the apparatus 100 is used for building a carcass structure of the tyre.

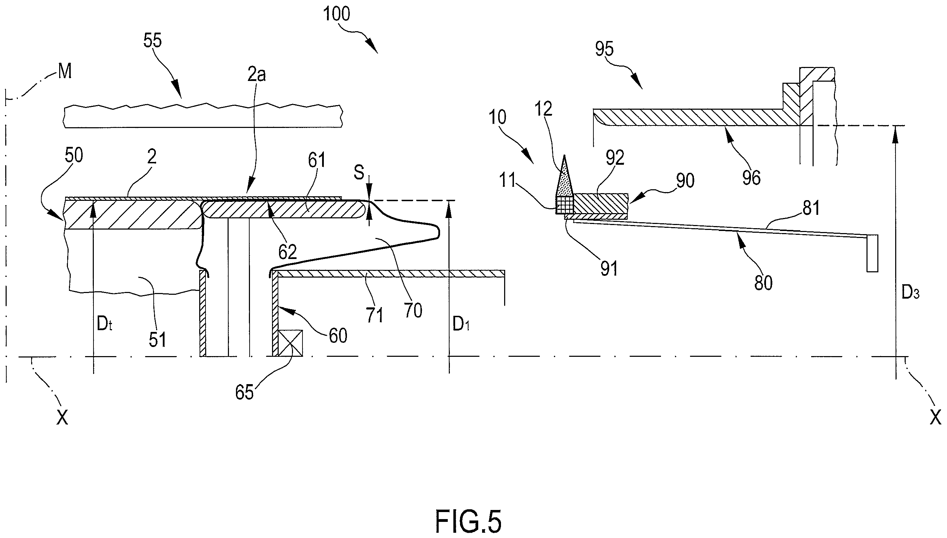

With reference to figures 5-17, the carcass structure comprises at least one carcass ply 2 including reinforcing cords embedded in a matrix of elastomeric material. Each carcass ply 2 has, at each of the opposite axial end portions thereof, a respective axial end edge 2a intended to be turned around a respective annular anchoring structure 10 provided for allowing the tyre to be mounted and kept in/on the rim of the wheel.

Each annular anchoring structure 10 is formed by a substantially circumferential annular insert 11 (or bead core) on which at least one filling insert 12 is applied in a radially outer position.

Preferably, the carcass ply 2 comprises, in a radially inner position, a semi-finished product (not shown) comprising in turn for example the so-called liner, under-liner and anti-abrasion layer (and generally called "complex"). Alternatively, the aforementioned liner, under-liner and anti-abrasion layer can consist of layers which are distinct from each other.

Preferably, one or more reinforcing structures (not shown) are arranged in a radially outer position with respect to the carcass ply 2, at the axial end edges 2a thereof. Each reinforcing structure is preferably arranged in an axially inner position with respect to the filling insert 12 of the annular anchoring structure 10.

With reference to figure 1, the apparatus 100 comprises a forming drum 50 preferably having a substantially cylindrical shape.

The forming drum 50 is rotatable about a rotation axis X-X and is supported by an assembly, not shown, comprising a mandrel group and a tailstock group.

Preferably, the mandrel group is stably associated with the ground, whereas the tailstock group slidable on an axial sliding guide (not shown) which is stably associated with the ground. The axial movement of the tailstock group allows the carcass structure to be axially removed from the forming drum 50 to proceed with the subsequent building operations of the tyre. In the case it would be necessary, the axial movement of the tailstock group also allows the forming drum 50 to be axially removed from the mandrel group for possible replacement, maintenance or dismounting operations.

The rotation of the forming drum 50 about the rotation axis X-X is obtained upon command of proper motor members (not shown) mechanically associated with the forming drum 50.

As far as the present invention is concerned, the apparatus 100, except for the mandrel group, the tailstock group and the aforementioned sliding guide, is symmetrical with respect to a middle plane M of the forming drum 50. For the sake of simplicity of description, the present invention will therefore be described and shown with reference to just one of the sides of the apparatus 100 with respect to the middle plane M (in the drawings, the right side of the middle plane M). What is described and shown is in any case also valid with reference to the other side of the apparatus 100 (in the drawings, the left side of the middle plane M).

Preferably, the forming drum 50 comprises a plurality of angular sectors (just one of them, indicated with 51, is shown in the drawings) circumferentially adjacent to one another and radially movable in a synchronous manner so as to provide the forming drum 50 with the capability of expanding and contracting radially. The forming drum 50 can be set at a plurality of diameters, each time selecting a specific diameter depending on the specific fitting diameter of the tyre to be produced. The forming drum 50 can also be radially contracted, at the end of the building of the carcass structure, to allow the removal of the carcass structure built thereon.

With particular reference to figure 5, the apparatus 100 comprises a deposition device 55 for depositing the carcass ply/plies 2 on the radially outer surface 52 of each angular sector 51 of the forming drum 50. In particular, by using the aforementioned device 55, at least one carcass ply 2 which, for example, has been previously cut to size is deposited on the forming drum 50. In the case of tyres with many carcass plies, the aforementioned deposition operation is repeated many times in succession. Each carcass ply 2 is then joined on the forming drum 50 to define a substantially cylindrical ply.

Once deposited on the forming drum 50, each carcass ply 2 has the opposite axial end edges 2a which project axially from the forming drum 50.

The apparatus 100 comprises, in each of the axially opposite areas with respect to the forming drum 50, an annular element 60 provided for supporting a respective axial end edge 2a of the carcass ply 2 when it is deposited on the forming drum 50.

The annular element 60 is rotatable about the rotation axis X-X.

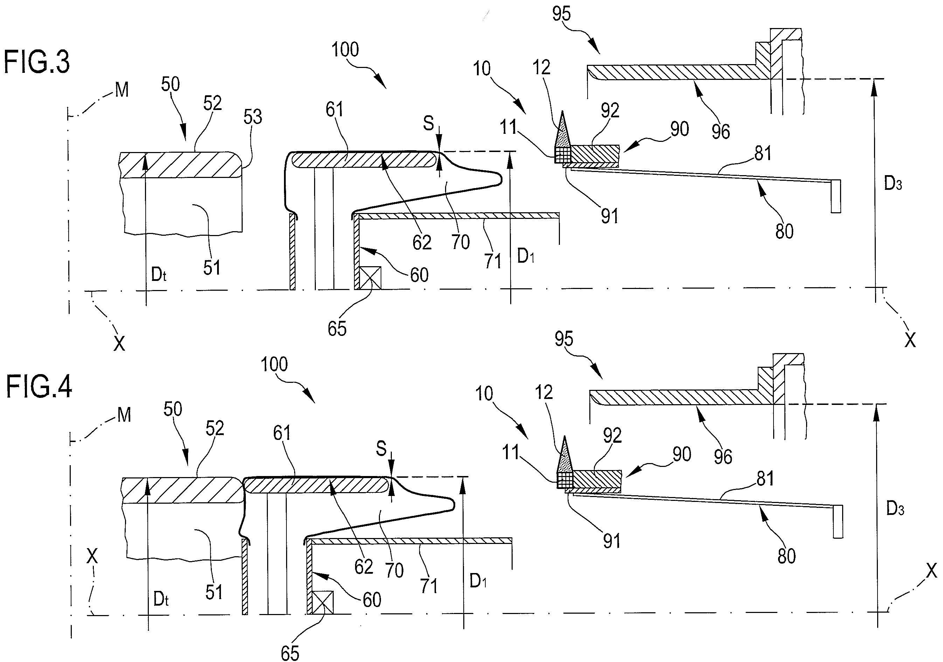

As described later on, the annular element 60 is axially movable with respect to the forming drum 50 between a first operating position in which the annular element 60 is axially adjacent to a respective axial end portion of the forming drum 50 (figures 4, 5, 8-16) and a second operating position in which the annular element 60 is axially distal from the forming drum 50 (figures 1-3, 6, 7 and 17).

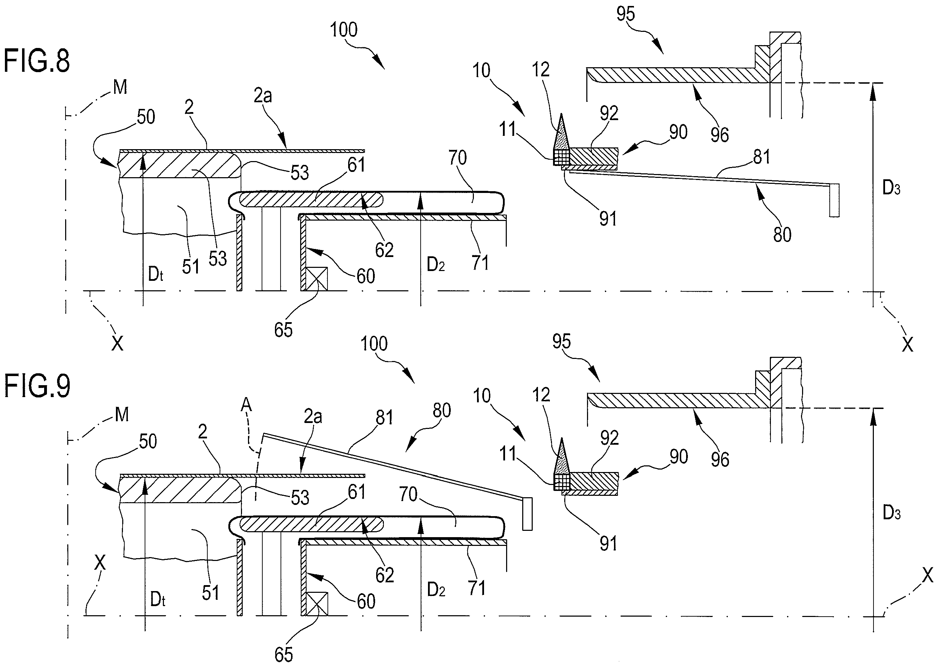

The annular element 60 is also radially expandable/contractable. In particular, the annular element 60 comprises a plurality of angular sectors 61 (only one of which is shown in the drawings) circumferentially adjacent to one another and radially movable (as well as axially movable) in a synchronous manner. The annular element 60 can thus be set at a first diameter D1 selected depending on the diameter at which the forming drum 50 is set and suitable for allowing the annular element 60 to support the respective axial end edge 2a of the carcass ply 2 (figures 3-6), and at a second diameter D2 smaller than said first diameter D1 and selected so that the annular element 60 does not hinder the subsequent building operations of the carcass structure (figures 8-11). Such a second operating position hereafter is also identified as "out of space" position.

The number of angular sectors 61 is preferably greater than that of the angular sectors 51, so as to obtain a good circularity of the annular element 60.

More preferably, the number of angular sectors 61 is greater than or equal to four, more preferably greater than or equal to eight, even more preferably comprised between 10 and 18. The Applicant indeed considers that the higher the number of angular sectors 61, the greater the surface continuity that can be ensured in the circumferential direction, for the same radial movement.

The annular element 60 can be mechanically coupled with the forming drum 50 so that, during the deposition operations of the carcass ply 2 on the forming drum 50, the annular element 60 is dragged in rotation about the axis X-X by the forming drum 50. For example, a coupling through front splines, pins, friction elements etc. can be used. It is also possible to use magnets.

Alternatively, like in the exemplifying embodiment illustrated in figures 1-17, the annular element 60 is mechanically disengaged from the forming drum 50. In this case appropriate motor members 65 are provided to drive the annular element 60 in rotation. Such motor means 65 are distinct from those specially provided for driving the forming drum 50 in rotation and are controlled in synchrony with the latter through a suitable software so as to obtain the synchronous rotation of the annular element 60 and forming drum 50.

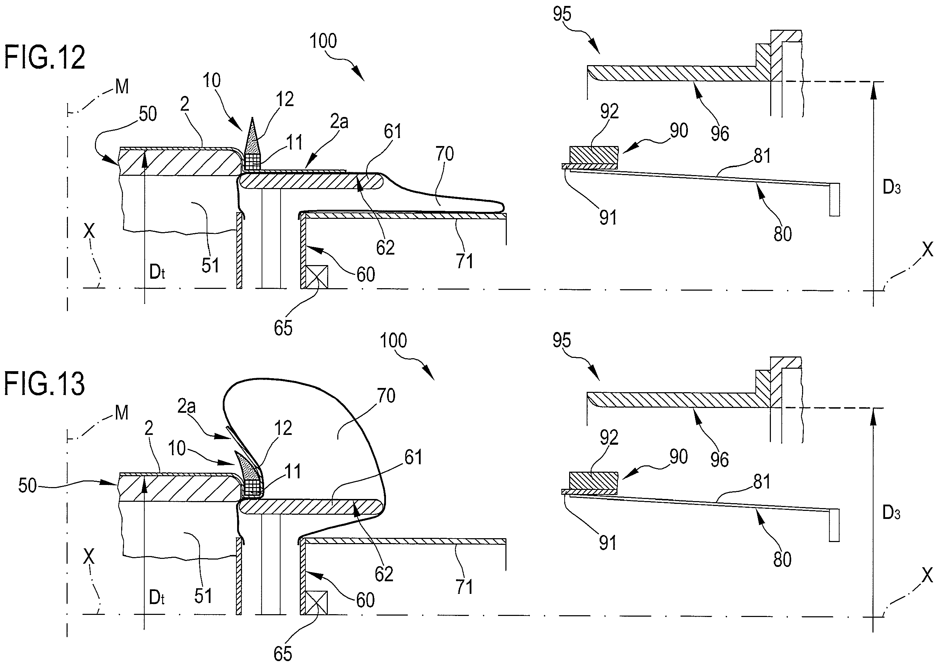

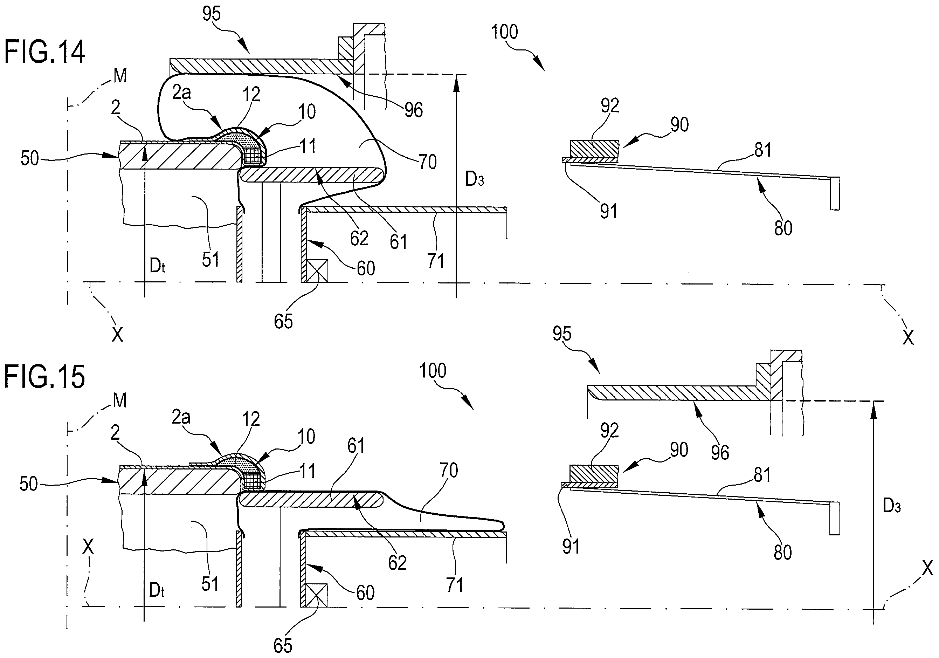

The apparatus 100 further comprises, in each of the axially opposite areas with respect to the forming drum 50, a respective inflatable bladder 70. Such an inflatable bladder 70 is configured, when inflated, to at least partially turn the axial end edge 2a of the carcass ply 2 around the annular anchoring structure 10 previously positioned on the end edge 2a of the carcass ply 2 in abutment against a side shoulder 53 of the forming drum 50 (figures 13 and 14). Through the effect of the aforementioned turning the filling insert 12 of the annular anchoring structure 10 abuts on the carcass ply 2 arranged above the forming drum 50.

The inflatable bladder 70 is associated with the annular element 60 so that at least one radially outer portion of the annular element 60 is arranged inside the inflatable bladder 70. In particular, the inflatable bladder 70 houses a radially outer surface 62 of each angular sector 61 inside it (figures 13 and 14). Such a radially outer surface 62 supports a corresponding portion of inflatable bladder 70 when the latter is deflated, as shown in figures 1-12 and 15-17.

The support of the inflatable bladder 70 also takes place thanks to the use of a support member 71.

When the annular element 60 is set at the aforementioned first diameter D1 to support the axial end edge 2a of the carcass ply 2 (figures 3-6), such a first diameter D1 is equal to the diameter Dt at which the forming drum 50 is set plus twice the thickness S of the inflatable bladder 70 (figures 1-6). In this way, the surface of the portion of deflated inflatable bladder 70 supported by the radially outer surface 62 of each angular sector 61 is axially aligned with the radially outer surface 52 of each angular sector 51 of the forming drum 50.

The apparatus 100 further comprises, in each of the axially opposite areas with respect to the forming drum 50, a pushing down device 80 for pushing the axial end edge 2a of the carcass ply 2 down towards the rotation axis X-X. Such a pushing down operation is necessary to allow the subsequent positioning of the annular anchoring structure 10 on the aforementioned end edge 2a.

The pushing down device 80 is arranged coaxially to the rotation axis X-X and is axially movable towards to and away from the forming drum 50 between a position distal from the forming drum 50, shown in figures 1-8 and 11-17, and a position proximal to the forming drum 50, shown in figures 9 and 10.

The pushing down device 80 preferably comprises a plurality of circumferentially adjacent blades 81. Such blades 81 preferably are at least partially one on top on the other in the circumferential direction and are made from elastically foldable material.

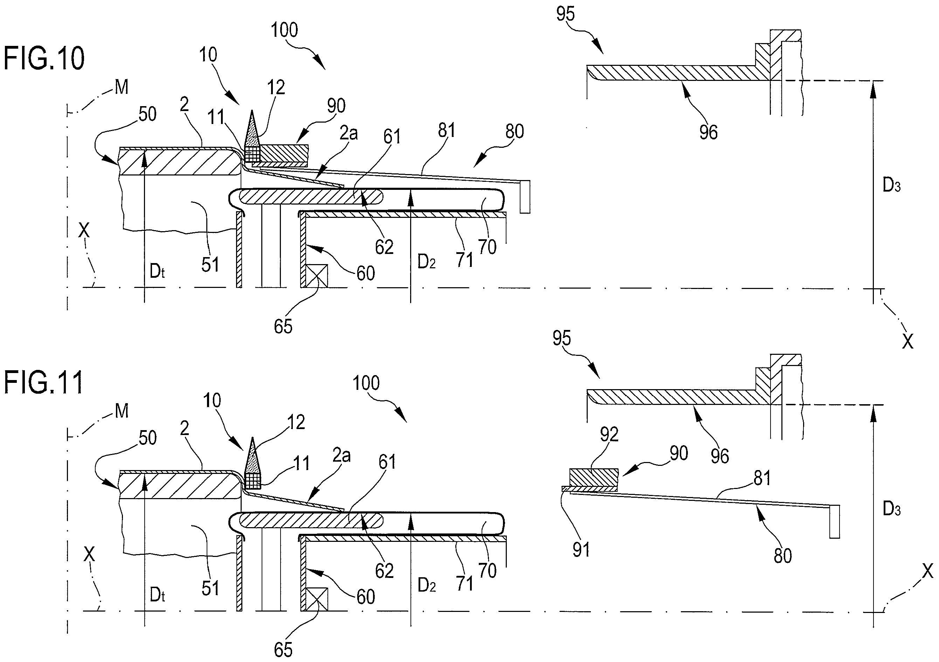

When the blades 81 are in the position proximal to the forming drum 50, they are at first in a rest condition and make an expanded configuration of the pushing down device 80. Such an expanded configuration is shown in figure 9. Thereafter, the blades are pushed down towards the rotation axis X-X (see broken line A in figure 9), in this way achieving the pushing down of the end edge 2a of the carcass ply (figure 10).

The pushing down of the blades 81 is carried out, in the way that will be described later on, as a consequence of a stress imparted by a positioning device 90 provided for positioning the annular anchoring structure 10 on the end edge 2a of the carcass ply 2. Such a positioning device 90 is provided in each of the axially opposite areas with respect to the forming drum 50.

The positioning device 90 is arranged coaxially to the rotation axis X-X and is axially movable between a position distal from the forming drum 50, shown in figures 1-9 and 11-17, and a position proximal to the forming drum 50, shown in figure 10. When the positioning device 90 reaches the aforementioned position proximal to the forming drum 50, the annular anchoring structure 10 is positioned on the end edge 2a of the carcass ply and it is in abutment against the side shoulder 53 of the forming drum 50.

In the specific embodiment herein illustrated, the positioning device 90 comprises a radially inner portion 91 configured to support the annular anchoring structure 10 at the radially inner surface thereof, and a radially outer portion 92 configured to push the annular anchoring structure 10 during the axial movement of the positioning device 90 towards the forming drum 50.

The positioning device 90 is axially movable in a radially outer position with respect to the pushing down device 80 and cooperates with the blades 81 of the pushing down device 80 to maintain, before and after the end edge 2a of the carcass ply 2 has been pushed down, the pushing down device 80 in a contracted configuration. Such a contracted configuration is shown in figures 1-8, before the aforementioned pushing down action, and in figures 10-17, after the aforementioned pushing down action.

More specifically, the pushing down device 80 passes from the contracted configuration of figures 1-8 to the expanded configuration of figure 9 upon an axial movement thereof towards the forming drum 50, keeping the positioning device 90 in a position distal from the forming drum 50. The pushing down device 80 goes back into the contracted configuration of figure 10 upon the subsequent axial movement of the positioning device 90 towards the forming drum 50. The pushing down device 80 and the positioning device 90 are then both moved away from the forming drum 50, with the pushing down device 80 staying in its contracted configuration because of the presence, in a radially outer position thereof, of the positioning device 90 (figures 11-17).

The apparatus 100 further comprises, in each of the axially opposite areas with respect to the forming drum 50, an annular thrusting member 95 for thrusting the inflatable bladder 70.

The annular thrusting member 95 is arranged coaxially to the rotation axis X-X and is axially movable towards to and away from the forming drum 50 between a position distal from the forming drum 50, shown in figures 1-13 and 15-17, and a position proximal to the forming drum 50, shown in figure 14. During the movement towards its position proximal to the forming drum 50, the annular member 95 deforms the inflated inflatable bladder 70, squashing it against the end edge 2a of the carcass ply 2. Due to this squashing, the filling insert 12 is pushed down on the carcass ply 2 and turning of the end edge 2a of the carcass ply 2 against the annular anchoring structure 10 is completed (figure 14).

The annular thrusting member 95 has a radially inner surface 96 whose diameter D3 is greater than the diameter D1. This is precisely to allow the annular thrusting member 95 to translate axially above the annular element 60 at a suitable height to allow the interaction between annular thrusting member 95 and inflated inflatable bladder 70.

A preferred embodiment of a process for producing a tyre in accordance with the present invention is now described, wherein this process can be carried out by the apparatus 100 described above.

Such a process initially comprises building the carcass structure of the tyre on the forming drum 50. -Now again, for the sake of simplicity, reference will be made to the operations that take place at just one of the sides of the apparatus 100 with respect to the middle plane M, being understood that the described operations also take place simultaneously at the other side of the apparatus 100.

The building of the carcass structure at first comprises setting the forming drum 50 at a diameter Dt selected depending on the tyre to be built (figure 1). Such setting is made by a synchronous radial expansion or contraction of all of the angular sectors 51 of the forming drum 50 until the diameter Dt is reached.

The annular element 60, the pushing down device 80, the positioning device 90 and the annular thrusting member 95 are at first all in a position distal from the forming drum 50, as shown in figure 1.

In the specific example herein illustrated, the annular element 60 is in an initial condition in which it has a diameter different (smaller, in the illustrated example) from the diameter Dt.

Thereafter, the annular anchoring structure 10 is loaded on the positioning device 90 (figure 2).

At the same time or after the loading of the annular anchoring structure 10 on the positioning device 90, the annular element 60 is radially expanded until it is set at the diameter D1 (figure 3). Such a radial expansion takes place as a consequence of the synchronous radial movement of all of the angular sectors 61 of the annular element 60.

The annular element 60 is then axially moved until a position proximal to the forming drum 50 is reached (figure 4). In such a proximal position the annular element 60 is substantially in contact with the shoulder 53 of the forming drum 50.

Then the deposition on the forming drum 50 and on the annular element 60 of the aforementioned complex (or of each of the layers defining the liner, the under-liner and the anti-abrasion layer, respectively), of the carcass ply/plies 2 in a radially outer position with respect to the complex and of the aforementioned reinforcing structure in a radially outer position with respect to the carcass ply/plies 2 is carried out, thus reaching the operating configuration shown in figure 5. In such a configuration, the annular element 60 provides the desired support for a respective axial end edge 2a of the carcass ply 2 and for a respective axial end edge of the aforementioned complex, as well as for a respective axial end edge of the aforementioned reinforcing structure.

The deposition of the carcass ply/plies 2 is carried out by the deposition device 55.

During such a deposition operation, the forming drum 50 and the annular support elements 60 rotate in synchrony about the rotation axis X-X.

The synchronous rotation of the forming drum 50 and of the annular element 60 is achieved either through mechanical coupling between forming drum 50 and annular element 60, or by using separate suitably synchronised driving members, as described above.

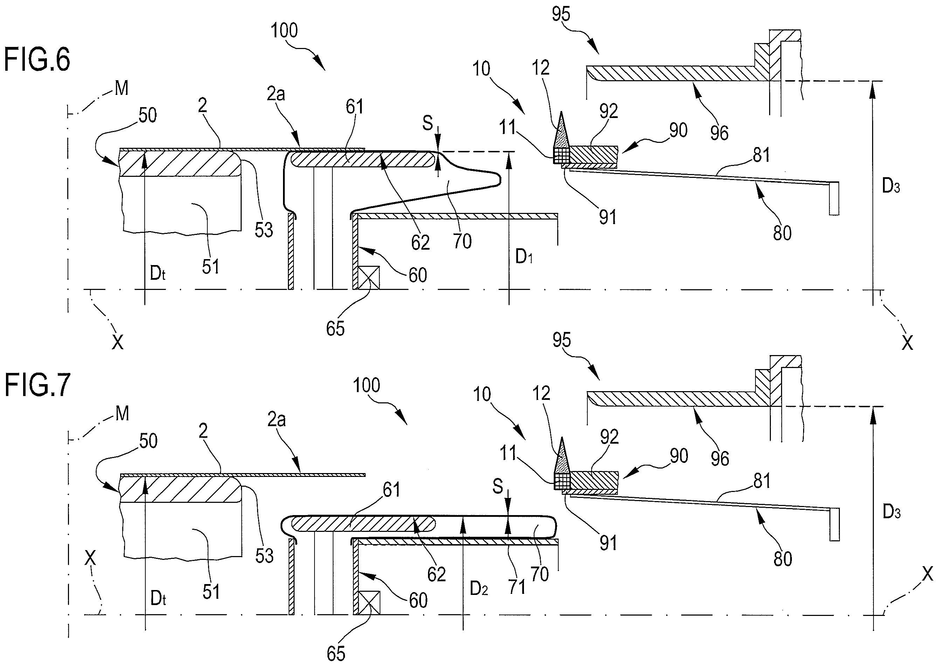

Thereafter, in the specific embodiment herein illustrated, the annular element 60 is axially moved away from the forming drum 50 (figure 6). The annular element 60 is then radially contracted (figure 7) until it is set at a diameter D2 smaller than D1 and, preferably, it is moved back into a position proximal to the forming drum 50 (figure 8).

At this point it is possible to proceed with the positioning of the annular anchoring structure 10 on the axial end edge 2a of the carcass ply 2.

For this purpose, the pushing down device 80 is axially moved to an axial position in which the respective blades 81 are in a position proximal to the forming drum 50. During this axial movement the blades 81 open, giving the pushing down device 80 an expanded configuration. The configuration shown in figure 9 is thus reached, in which the blades 81 are in a radially outer position with respect to the end edge 2a of the carcass ply 2.

The positioning device 90 is then axially moved towards the forming drum 50, until the condition shown in figure 10 is reached. During this axial movement the blades 81 are thrust by the positioning device 90 towards the rotation axis X-X. Such a thrusting causes the end edge 2a of the carcass ply 2 to be pushed down and the annular anchoring structure 10 to be positioned on the end edge 2a of the carcass ply 2 at the side shoulder 53 of the forming drum 50.

Thereafter, the pushing down device 80 and the positioning device 90 are moved away from the forming drum 50, as shown in figure 11. The annular anchoring structure 10 remains constrained by stickiness to the carcass ply 2.

Preferably, the annular element 60 at this point is radially expanded until it goes substantially into abutment against the radially inner surface of the annular anchoring structure 10 (figure 12), so as to provide the annular anchoring structure 10 with a suitable radial support.

In some embodiments of the present invention, the aforementioned radial expansion is carried out while the annular anchoring structure 10 is axially thrust against the forming drum 50 by the positioning device 90 (in particular by the radially outer portion 92 of the positioning device 90).

Then the inflation of the inflatable bladder 70 is carried out (figure 13). Such inflation causes the partial turning of the axial end edge 2a of the carcass ply 2 around the annular anchoring structure 10.

In order to obtain the complete turning of the axial end edge and the simultaneous pushing down of the filling insert 12 of the annular anchoring structure 10 on the carcass ply 2, the annular thrusting member 95 is axially moved towards the forming drum 50 until it is brought to a radially outer position with respect to the forming drum 50 and the annular element 60 (figure 14). In this way the compacting of the turned axial end edge of the carcass ply 2 around the annular anchoring structure 10 and the consolidation of the bead thus formed are obtained.

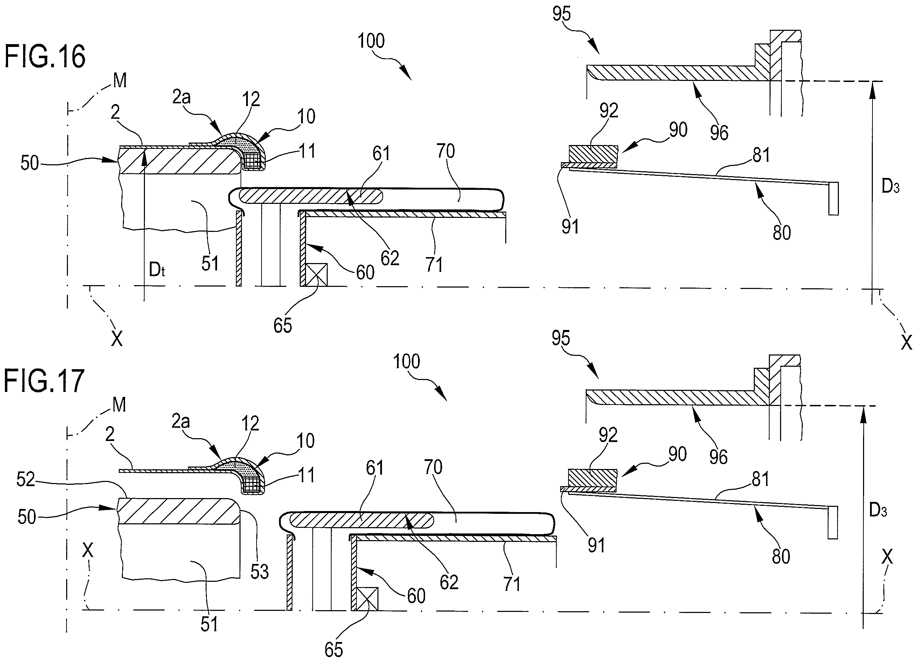

At this point, the building of the carcass structure is completed. The inflatable bladder 70 can thus be deflated, the annular thrusting member 95 is moved away from the forming drum 50 and moved back to its initial position (figure 15). The annular element 60 is radially contracted thus separating from the turned end portion 2a of the carcass ply 2 (figure 16).

Thereafter, also the forming drum 50 is radially contracted, thus separating from the carcass structure 2 (figure 17), which has previously been gripped by suitable gripping devices, not shown.

The carcass structure is then arranged in a radially inner position with respect to a crown structure comprising at least one belt layer and, in a radially outer position with respect to the at least one belt layer, a tread band. The carcass structure is then toroidally shaped and associated with the crown structure, for example in a suitable shaping drum.

Of course, a man skilled in the art can provide for further modifications and variants to the invention described above, in order to satisfy specific and contingent use requirements, said variants and modifications in any case being within the scope of protection as defined by the following claims.

## Claims

1. Process for producing tyres for vehicle wheels, comprising building a carcass structure on a forming drum (50) having a rotation axis (X-X), wherein building a carcass structure comprises:
- providing, at each of the opposite axial end portions of said forming drum (50), a radially expandable and contractable annular element (60) having a radially outer surface (62) arranged inside an inflatable bladder (70) and supporting said inflatable bladder (70) when it is deflated;
- arranging said annular element (60) in a first operating position axially adjacent to said forming drum (50), said annular element (60) being set at a predetermined first diameter (D1);
- depositing said at least one carcass ply (2) on said forming drum (50), including depositing an axial end edge (2a) of said at least one carcass ply (2) on said annular element (60);
- radially contracting said annular element (60) until it is set at a predetermined second diameter (D2) smaller than said first diameter (D1);
- positioning an annular anchoring structure (10) onto said axial end edge (2a);
- turning said axial end edge (2a) around said annular anchoring structure (10) by at least inflating said inflatable bladder (70).

2. Process according to claim 1, comprising, after depositing said at least one carcass ply (2) on said forming drum (50) and before radially contracting said annular element (60):
- axially moving said annular element (60) from said first operating position to a second operating position axially distal from said forming drum (50).

3. Process according to claim 2, comprising, after radially contracting said annular element (60):
- axially moving said annular element (60) from said second operating position to said first operating position.

4. Process according to claim 3, wherein axially moving said annular element (60) from said second operating position to said first operating position is carried out before positioning said annular anchoring structure (10) onto said axial end edge (2a).

5. Process according to any one of the previous claims, comprising, after positioning said annular anchoring structure (10) onto said axial end edge (2a) and before turning said axial end edge (2a) around said annular anchoring structure (10):
- radially expanding said annular element (60) until said inflatable bladder (70) is brought into abutment against said annular anchoring structure (10).

6. Process according to claim 5, comprising, after turning said axial end edge (2a) around said annular anchoring structure (10), deflating said inflatable bladder (70) and radially contracting said annular element (60).

7. Process according to any one of the previous claims, wherein, before depositing said at least one carcass ply (2) on said forming drum (50), said forming drum (50) is set at a predetermined deposition diameter (Dt) and wherein said first diameter (D1) differs from said deposition diameter (Dt) substantially by twice the thickness (S) of said inflatable bladder (70).

8. Process according to any one of the previous claims, wherein arranging said annular element (60) in said first operating position comprises rotatably coupling said annular element (60) with said forming drum (50).

9. Process according to any one of claims 1 to 7, comprising, after arranging said annular element (60) in said first operating position and before depositing said at least one carcass ply (2), synchronising in rotation said annular element (60) and said forming drum (50).

10. Apparatus (100) for producing tyres for vehicle wheels, comprising:
- a forming drum (50) having a rotation axis (X-X);
- a deposition device (55) for depositing at least one carcass ply (2) on said forming drum (50);
the apparatus (100) further comprising, at each of the opposite axial end portions of said forming drum (50):
- a radially expandable and contractable annular element (60) configured to support an axial end edge (2a) of said at least one carcass ply (2);
- a positioning device (90) for positioning an annular anchoring structure (10) onto said axial end edge (2a);
- an inflatable bladder (70) configured to turn said axial end edge (2a) around said annular anchoring structure (10);
wherein a radially outer surface (62) of said annular element (60) is arranged inside said inflatable bladder (70) and supports said inflatable bladder (70) when it is deflated;
wherein said annular element (60) can be set at a predetermined first diameter (D1) to support said axial end edge (2a) of said at least one carcass ply (2) and at a predetermined second diameter (D2), smaller than said first diameter (D1), to allow said annular anchoring structure (10) to be positioned onto said axial end edge (2a).

11. Apparatus (100) according to claim 10, wherein said annular element (60) is axially movable between a first operating position axially adjacent to said forming drum (50) and a second operating position axially distal from said forming drum (50).

12. Apparatus (100) according to claim 10 or 11, wherein when said forming drum (50) is set at a predetermined deposition diameter (Dt) said first diameter (D1) differs from said deposition diameter (Dt) substantially by twice the thickness (S) of said inflatable bladder (70).

13. Apparatus (100) according to any one of claims 10 to 12, wherein said annular element (60) comprises a plurality of angular sectors (61) circumferentially adjacent to one another and radially movable in a synchronous manner.

14. Apparatus (100) according to any one of claims 10 to 13, comprising a mechanical system for coupling said annular element (60) with said forming drum (50).

15. Apparatus (100) according to any one of claims 10 to 14, comprising an electronic system for synchronising the rotation of said annular element (60) with the rotation of said forming drum (50).

## Patentansprüche

1. Verfahren zur Herstellung von Reifen für Fahrzeugräder, umfassend das Fertigen einer Karkassenstruktur auf einer Formungstrommel (50) mit einer Drehachse (X-X), wobei das Fertigen einer Karkassenstruktur Folgendes umfasst:
- Bereitstellen an jedem der gegenüberliegenden axialen Endabschnitte der Formungstrommel (50) eines radial ausdehnbaren und zusammenziehbaren ringförmigen Elements (60) mit einer radial äußeren Fläche (62), die innerhalb einer aufblasbaren Blase (70) angeordnet ist und die aufblasbare Blase (70), stützt, wenn sie nicht aufgeblasen ist;
- Anordnen des ringförmigen Elements (60) in einer ersten Betriebsstellung axial benachbart zu der Formungstrommel (50), wobei das ringförmige Element (60) an einem vorbestimmten ersten Durchmesser (D1) eingestellt wird;
- Ablegen der zumindest einen Karkassenlage (2) an der Formungstrommel (50), umfassend das Ablegen einer axialen Endkante (2a) der zumindest einen Karkassenlage (2) an dem ringförmigen Element (60);
- radiales Zusammenziehen des ringförmigen Elements (60), bis es an einem vorbestimmten zweiten Durchmesser (D2) eingestellt ist, der kleiner als der erste Durchmesser (D1) ist;
- Positionieren einer ringförmigen Verankerungsstruktur (10) an der axialen Endkante (2a);
- Umlegen der axialen Endkante (2a) um die ringförmige Verankerungsstruktur (10) zumindest durch Aufblasen der aufblasbaren Blase (70).

2. Verfahren nach Anspruch 1, umfassend, nach dem Ablegen der zumindest einen Karkassenlage (2) an der Formungstrommel (50) und vor dem radialen Zusammenziehen des ringförmigen Elements (60):
- axiales Bewegen des ringförmigen Elements (60) aus der ersten Betriebsstellung in eine zweite Betriebsstellung axial distal von der Formungstrommel (50).

3. Verfahren nach Anspruch 2, umfassend, nach dem radialen Zusammenziehen des ringförmigen Elements (60):
- axiales Bewegen des ringförmigen Elements (60) aus der zweiten Betriebsstellung in die erste Betriebsstellung.

4. Verfahren nach Anspruch 3, wobei das axiale Bewegen, des ringförmigen Elements (60) aus der zweiten Betriebsstellung in die erste Betriebsstellung vor dem Positionieren der ringförmigen Verankerungsstruktur (10) an der axialen Endkante (2a) ausgeführt wird.

5. Verfahren nach einem der vorhergehenden Ansprüche, umfassend, nach dem Positionieren der ringförmigen Verankerungsstruktur (10) an der axialen Endkante (2a) und vor dem Umlegen der axialen Endkante (2a) um die ringförmige Verankerungsstruktur (10):
- radiales Ausdehnen des ringförmigen Elements (60), bis die aufblasbare Blase (70) gegen die ringförmige Verankerungsstruktur (10) zur Anlage gebracht ist.

6. Verfahren nach Anspruch 5, umfassend, nach dem Umlegen der axialen Endkante (2a) um die ringförmige Verankerungsstruktur (10), das Kollabieren der aufblasbaren Blase (70) und das radiale Zusammenziehen des ringförmigen Elements (60).

7. Verfahren nach einem der vorhergehenden Ansprüche, wobei, vor dem Ablegen der zumindest einen Karkassenlage (2) an der Formungstrommel (50), die Formungstrommel (50) auf einen vorbestimmten Ablegedurchmesser (Dt) eingestellt wird, und wobei der erste Durchmesser (D1) sich von dem Ablegedurchmesser (Dt) im Wesentlichen durch das Zweifache der Dicke (S) der aufblasbaren Blase (70) unterscheidet.

8. Verfahren nach einem der vorhergehenden Ansprüche, wobei das Anordnen des ringförmigen Elements (60) in der ersten Betriebsstellung das drehbare Koppeln des ringförmigen Elements (60) mit der Formungstrommel (50) umfasst.

9. Verfahren nach einem der Ansprüche 1 bis 7, umfassend, nach dem Anordnen des ringförmigen Elements (60) in der ersten Betriebsstellung und vor dem Ablegen der zumindest einen Karkassenlage (2), das Synchronisieren der Drehung des ringförmigen Elements (60) und der Formungstrommel (50).

10. Vorrichtung (100) zur Herstellung von Reifen für Fahrzeugräder, wobei die Vorrichtung umfasst;
- eine Formungstrommel (50) mit einer Drehachse (X-X);
- eine Ablegeeinrichtung (55) zum Ablegen zumindest einer Karkassenlage (2) an der Formungstrommel (50);
wobei die Vorrichtung (100) ferner an jedem der gegenüberliegenden axialen Endabschnitte der Formungstrommel (50) umfasst:
- ein radial ausdehnbares und zusammenziehbares ringförmiges Element (60), das dazu ausgestaltet ist, eine axiale Endkante (2a) der zumindest einen Karkassenlage (2) zu tragen;
- ein Positioniereinrichtung (90) zum Positionieren einer ringförmigen Verankerungsstruktur (10) an der axialen Endkante (2a) ;
- eine aufblasbare Blase (70), die dazu ausgestaltet ist, die axiale Endkante (2a) um die ringförmige Verankerungsstruktur (10) herumzulegen;
wobei eine radial äußere Fläche (62) des ringförmigen Elements (60) innerhalb der aufblasbaren Blase (70) angeordnet ist und die aufblasbare Blase (70) stützt, wenn sie nicht aufgeblasen ist;
wobei das ringförmige Element (60) auf einen vorbestimmten ersten Durchmesser (D1) eingestellt werden kann, um die axiale Endkante (2a) der zumindest einen Karkassenlage (2) zu tragen, sowie auf einen vorbestimmten zweiten Durchmesser (D2), der geringer ist als der erste Durchmesser (D1), um der ringförmigen Verankerungsstruktur (10) zu erlauben, an der axialen Endkante (2a) positioniert zu werden.

11. Vorrichtung (100) nach Anspruch 10, wobei das ringförmige Element (60) axial zwischen einer ersten Betriebsstellung axial benachbart zu der Formungstrommel (50) und einer zweiten Betriebsstellung axial distal von der Formungstrommel (50) beweglich ist.

12. Vorrichtung nach einem der vorhergehenden Ansprüche, wobei, wenn die Formungstrommel (11) auf einen vorbestimmten Ablegedurchmesser (Dt) eingestellt ist, der erste Durchmesser (D1) sich von dem Ablegedurchmesser (Dt) im Wesentlichen durch das Zweifache der Dicke (S) der aufblasbaren Blase (70) unterscheidet.

13. Vorrichtung (100) nach einem der Ansprüche 10 bis 12, wobei das ringförmige Element (60) eine Vielzahl von ersten Winkelsektoren (61) umfasst, die in Umfangsrichtung zueinander benachbart und radial auf synchrone Weise beweglich sind.

14. Vorrichtung (100) nach einem der Ansprüche 10 to 13, umfassend ein mechanisches System zum Koppeln des ringförmigen Elements (60) mit der Formungstrommel (50).

15. Vorrichtung (100) nach einem der Ansprüche 10 bis 14, umfassend ein elektronisches System zum Synchronisieren der Drehung des ringförmigen Elements (60) mit der Drehung der Formungstrommel (50).

## Revendications

1. Procédé de production de pneus pour des roues de véhicule, comprenant le fait de construire une structure de carcasse sur un tambour de formation (50) ayant un axe de rotation (X-X), dans lequel la construction d'une structure de carcasse comprend le fait :
- de fournir, au niveau de chacune des parties d'extrémité axiale opposées dudit tambour de formation (50), un élément annulaire radialement extensible et rétractable (60) ayant une surface radialement externe (62) agencée à l'intérieur d'une vessie gonflable (70) et supportant ladite vessie gonflable (70) lorsqu'elle est dégonflée ;
- d'agencer ledit élément annulaire (60) dans une première position de fonctionnement axialement adjacente audit tambour de formation (50), ledit élément annulaire (60) étant fixé à un premier diamètre prédéterminé (D1) ;
- de déposer ledit au moins un pli de carcasse (2) sur ledit tambour de formation (50), y compris le fait de déposer un bord d'extrémité axiale (2a) dudit au moins un pli de carcasse (2) sur ledit élément annulaire (60) ;
- de contracter radialement ledit élément annulaire (60) jusqu'à ce qu'il soit fixé à un deuxième diamètre prédéterminé (D2) inférieur audit premier diamètre (D1) ;
- de positionner une structure d'ancrage annulaire (10) sur ledit bord d'extrémité axiale (2a) ;
- de faire tourner ledit bord d'extrémité axiale (2a) autour de ladite structure d'ancrage annulaire (10) en gonflant au moins ladite vessie gonflable (70).

2. Procédé selon la revendication 1, comprenant, après avoir déposé ledit au moins un pli de carcasse (2) sur ledit tambour de formation (50) et avant de contracter radialement ledit élément annulaire (60), le fait :
- de déplacer axialement ledit élément annulaire (60) de ladite première position de fonctionnement vers une deuxième position de fonctionnement axialement distale par rapport audit tambour de formation (50).

3. Procédé selon la revendication 2, comprenant, après la contraction radiale dudit élément annulaire (60), le fait :
- de déplacer axialement ledit élément annulaire (60) de ladite deuxième position de fonctionnement vers ladite première position de fonctionnement.

4. Procédé selon la revendication 3, dans lequel le déplacement axial dudit élément annulaire (60) de ladite deuxième position de fonctionnement vers ladite première position de fonctionnement, est effectué avant de positionner ladite structure d'ancrage annulaire (10) sur ledit bord d'extrémité axiale (2a).

5. Procédé selon l'une quelconque des revendications précédentes, comprenant, après avoir positionné ladite structure d'ancrage annulaire (10) sur ledit bord d'extrémité axiale (2a) et avant de faire tourner ledit bord d'extrémité axiale (2a) autour de ladite structure d'ancrage annulaire (10), le fait :
- de dilater radialement ledit élément annulaire (60) jusqu'à ce que ladite vessie gonflable (70) soit amenée en butée contre ladite structure d'ancrage annulaire (10).

6. Procédé selon la revendication 5, comprenant, après avoir fait tourné ledit bord d'extrémité axiale (2a) autour de ladite structure d'ancrage annulaire (10), le fait de dégonfler ladite vessie gonflable (70) et de contracter radialement ledit élément annulaire (60).

7. Procédé selon l'une quelconque des revendications précédentes, dans lequel, avant de déposer ledit au moins un pli de carcasse (2) sur ledit tambour de formation (50), ledit tambour de formation (50) est fixé à un diamètre de dépôt prédéterminé (Dt) et dans lequel ledit premier diamètre (D1) est différent dudit diamètre de dépôt (Dt) essentiellement de deux fois l'épaisseur (S) de ladite vessie gonflable (70).

8. Procédé selon l'une quelconque des revendications précédentes, dans lequel l'agencement dudit élément annulaire (60) dans ladite première position de fonctionnement comprend le couplage rotatif dudit élément annulaire (60) audit tambour de formation (50).

9. Procédé selon l'une quelconque des revendications 1 à 7, comprenant, après l'agencement dudit élément annulaire (60) dans ladite première position de fonctionnement et avant le dépôt dudit au moins un pli carcasse (2), le fait de synchroniser en rotation ledit élément annulaire (60) et ledit tambour de formation (50).

10. Appareil (100) pour produire des pneus pour des roues de véhicule, comprenant :
- un tambour de formation (50) ayant un axe de rotation (X-X) ;
- un dispositif de dépôt (55) pour déposer au moins un pli de carcasse (2) sur ledit tambour de formation (50) ;
l'appareil (100) comprenant en outre, au niveau de chacune des parties d'extrémité axiale opposées dudit tambour de formation (50) :
- un élément annulaire (60) radialement extensible et rétractable, configuré pour supporter un bord d'extrémité axiale (2a) dudit au moins un pli de carcasse (2) ;
- un dispositif de positionnement (90) pour positionner une structure d'ancrage annulaire (10) sur ledit bord d'extrémité axiale (2a) ;
- une vessie gonflable (70) configurée pour faire tourner ledit bord d'extrémité axiale (2a) autour de ladite structure d'ancrage annulaire (10) ;
dans lequel une surface radialement extérieure (62) dudit élément annulaire (60) est agencée à l'intérieur de ladite vessie gonflable (70) et supporte ladite vessie gonflable (70) lorsqu'elle est dégonflée ;
dans lequel ledit élément annulaire (60) peut être fixé à un premier diamètre prédéterminé (D1) pour supporter ledit bord d'extrémité axiale (2a) dudit au moins un pli de carcasse (2) et à un deuxième diamètre prédéterminé (D2), inférieur audit premier diamètre (D1), pour permettre à ladite structure d'ancrage annulaire (10) d'être positionnée sur ledit bord d'extrémité axiale (2a).

11. Appareil (100) selon la revendication 10, dans lequel ledit élément annulaire (60) est axialement mobile entre une première position de fonctionnement axialement adjacente audit tambour de formation (50) et une deuxième position de fonctionnement axialement distale par rapport audit tambour de formation (50).

12. Appareil (100) selon la revendication 10 ou 11, dans lequel lorsque ledit tambour de formation (50) est fixé à un diamètre de dépôt prédéterminé (Dt), ledit premier diamètre (D1) est différent dudit diamètre de dépôt (Dt) essentiellement de deux fois l'épaisseur (S) de ladite vessie gonflable (70).

13. Appareil (100) selon l'une quelconque des revendications 10 à 12, dans lequel ledit élément annulaire (60) comprend une pluralité de secteurs angulaires (61) adjacents de manière circonférentielle les uns aux autres et radialement mobiles de manière synchrone.

14. Appareil (100) selon l'une quelconque des revendications 10 à 13, comprenant un système mécanique pour coupler ledit élément annulaire (60) audit tambour de formation (50).

15. Appareil (100) selon l'une quelconque des revendications 10 à 14, comprenant un système électronique pour synchroniser la rotation dudit élément annulaire (60) avec la rotation dudit tambour de formation (50).
